Europäisches Patentamt

European Patent Office

Office européen des brevets

(11) Publication number:
0 266 141
A2

# (12) EUROPEAN PATENT APPLICATION

(21) Application number: 87309411.4

(22) Date of filing: 23.10.87

(51) Int. Cl.4: A 23 L 1/04

(30) Priority: 28.10.86 NZ 218086

(43) Date of publication of application:
04.05.88 Bulletin 88/18

(84) Designated Contracting States:
AT BE CH DE ES FR GB GR IT LI LU NL SE

(71) Applicant: MASSEY UNIVERSITY
Palmerston North (NZ)

THE DIRECTOR GENERAL OF THE MINISTRY OF
AGRICULTURE AND FISHERIES
Gillingham House 101-103 The Terrace
Wellington (NZ)

(72) Inventor: Wilkinson, Brian Herbert Patrick
501 Featherston Street
Palmerston North (NZ)

Barrett, Susan Margaret
371 Ruahine Street
Palmerston North (NZ)

Deuel, Charlotte Lynn
248 Park Road
Palmerston North (NZ)

(74) Representative: Cline, Roger Ledlie et ai
EDWARD EVANS & CO. Chancery House 53-64 Chancery
Lane
London WC2A 1SD (GB)

(54) Texture stable food product.

(57) A method of minimising the texture instability of a food product (especially when being thawed from a frozen state) which comprises impregnating the interstitial and/or intracellular spaces of the food providing the food with a gellable colloid solution by a process selected from (preferably) vacuum infusion and pressure injection and thereafter causing the solution to gel. Preferably the food is selected from the group consisting of fruits and seed bearing vegetable fruits. Preferably very little gelled solution is allowed on the surface of the product.

EP 0 266 141 A2

**Description**

TEXTURE STABLE FOOD PRODUCT

The present invention relates to improvements in and/or relating to the treatment of food products so as to render them substantially texture stable and food products created by such a method or capable of being created by such a method.

Many types of fruit or seedbearing vegetable fruit are of a cellular nature or substantially cellular nature which provides a multiplicity of intracellular and/or interstitial spaces in which a fluid (normally a water containing liquid mix) and a gas including normally oxygen and tissue gases is present. When such a fruit or vegetable is frozen the freezing of at least part of the liquid fraction damages the substantially cellular structure and upon thaw there is then a loss of the interstitial and/or intracellular contents leading to unwanted instability in the fruit or seed bearing vegetable fruit or any product derived therefrom as well as providing for a reduction in the asthetics of the fruit or any products derived therefrom. The loss of the interstitial, and/or cellular liquid is a problem in many instances, e.g. when garnishing with frozen fruit pieces. Other texture instability is exhibited during heating, drying or chilling of food products.

Accordingly the present invention is directed to means and methods to minimise the texture instability of a food product having intracellular and/or interstitial spaces and to food products exhibiting such stability.

Accordingly in one aspect the invention consists in a method to minimise the texture instability of a food product having intracellular and/or interstitial spaces, said method comprising the steps of impregnating the intracellular and/or interstitial spaces of the food with a gellable colloid solution by a process selected from vacuum infusion and/or pressure injection, and
thereafter causing said colloid solution to gel.

Preferably said food is a fruit (but alternatively can be a seedbearing vegetable fruit).

Preferably said colloid solution is hydrophilic.

Preferably oxygen and other tissue gases are partially removed using vacuum from the interstitial and/or intracellular spaces of the fruit.

Preferably there is no substantial removal of liquid from the interstitial and/or intracellular spaces in order to make way for the gellable colloid solution.

Preferably said colloid solution is a hydrophilic colloid (such as sodium alginate potassium alginate, ammonium alginate, propylene gylcol alginate or low methoxyl pectin) which is gelled in the presence of calcium ions. The preferred hydrophilic colloid is sodium alginate. Other gums or starches may have synergistic effects such as xanthan gum, carboxymethyl cellulose, carrageenan, guar gum, locust bean gum, other gums, modified and unmodified starches.

Preferably said colloid solution is gelled by a pH adjustment and the presence of calcium ions in the colloid solution and in the acid-calcium bath.

Preferably said pH adjustment is achieved by placing the fruit or pieces thereof in an acid-calcium bath for a period of time.

While the preferred acid is citric acid others suitable include malic, adipic, fumaric, tartanic, lactic, acetic.

Where the preferred calcium salts are dicalcium phosphate dihydrate, dicalcium phosphate anhydrous, calcium carbonate or other insoluble calcium salts other calcium salts such as calcium chloride, calcium acetate, calcium lactate, calcium gluconate may also be used in the acid/calcium bath.

Preferably said fruit or pieces thereof have excess moisture removed therefrom preferably using hot air dehydration.

Preferably the fruit or pieces of fruit are frozen subsequent to the causing of said colloid solution to gel and preferably after the removal of any excess moisture thereon.

The texture stability provides freeze-thaw stability but it should be remembered that the fruit or pieces of fruit need not necessarily be frozen since texture stability during dehydration, refrigeration, chilling and heating is also provided by the use of the present invention. But most benefit is gained when the treated product is frozen.

Preferably the method if performed substantially as hereinafter described on any of a number of suitable fruits of which the following are merely examples - kiwifruit, melons, mangoes, citrus fruits (oranges, lemons) berryfruit (boysenberry, strawberries), stone fruit (nectarines, apricots), and pip fruit.

Methods of the present invention can also be performed with seedbearing vegetable fruit (e.g. pimento, tomatoes, cucumber, zucchini).

Preferably said fruit is peeled prior to treatment although in some forms of the present invention minimal peeling can take place provided there is a sufficient means whereby impregnation can take place of first the colloid solution and then the pH adjusting solution which is preferably used. Injection rather than vacuum soaking can be used instead.

In a further aspect the present invention consists in a texture stable food product prepared from a food having interstitial and/or intracellular spaces, the product having been stabilised substantially against structural collapse by the setting of a colloid gel solution that has impregnated sufficient of said spaces for the texture stabilising purpose, the impregnation having been achieved by a process selected from vacuum infusion and/or solution injection.

In a further aspect the present invention consists in a non frozen food product prepared from a fruit or vegetable using a method in accordance with the present invention.

In a further aspect the present invention consists in a frozen fruit product prepared by a method in accordance with the present invention.

In yet a further aspect the present invention consists in texture stable, fruit or seedbearing vegetable fruit product in a frozen state, the interstitial and/or intracellular spaces of the fruit or vegetable including a gelled colloid solution.

Preferably said gelled colloid solution binds water and tends to minimise ice crystal formation within the interstitial and/or intracellular spaces.

Preferably said interstitial and/or intracellular spaces have less gas therein than would be present if the gelled colloid solution were not present.

The preferred form shall be described with reference to fruits but is also applicable to seedbearing vegetable fruit.

The structure of many fruits is partly destroyed or injured by freezing. In standard freezing processes, the free water forms ice crystals during the freezing time. Depending on the speed of the freezing, these crystals can be large or small. The crystals cause textural damage through physical puncturing and collapse of cells, thereby affecting the functional properties of the fruit. This degradation can lead to texture loss, loss of colour and loss of fluid from the product. All of these are undesirable.

To effect an improvement in traditional freezing techniques it is necessary to minimise the effects of ice crystal formation. This is achieved by incorporating a hydrophilic colloid into the system, which binds the free water. Therefore smaller and fewer ice crystals form, so less damage is incurred during freezing the product. The gelled colloid provides a structural support that is itself freeze-thaw stable.

The presence of oxygen is also undesirable in foods. It has negative effects upon preservation and storage characteristics. Air entrapped in cells and within tissue voids, the presence of micro-organisms and the existence of various naturally occuring enzymes in food act to limit storage life of food products. Flavour constituents, proteins, pigments, carbohydrates and vitamins can be destroyed or altered by oxidation, thus adversely affecting taste, appearance and nutritional aspects of food.

In the preferred form of the present invention it was deemed appropriate to have a system which improved the functional characteristics as well as increasing the shelf life of processed fruit products through
- reduced drip-loss on thawing
- retention of texture before, during and after processing operations

Accordingly the system developed preferably has the following objectives

(1) To remove some oxygen from the foodstuff so that the deleterious consequences of its presence are reduced.

(2) To impregnate the flesh of fruits with a gel-forming solution so that the structural characteristics and appearance of the food post-processing is as similar as possible to that of pre-processing. Loss of texture, colour and fluid must be minimised.

(3) To allow addition of colour, sweeteners (sucrose, glucose), humectants (e.g glycerol, sorbitol, ethylene, glycol) and flavours to food, so as to improve their organoleptic and visual attributes.

(4) To delay gelation by maintaining neutral and/or alkaline high pH in the gel-forming solution.

(5) To form a stable gel within the fruit product, once gases are removed by effecting a reduction in pH and by contact with calcium ions.

Example 1 - Kiwifruit

The preferred procedure that has been developed for kiwifruit will now be described.

(1) The fruit to be used is washed and sliced/diced/cut if necessary.

(2) An alkaline pH liquid is prepared, which contains a hydrophilic colloid such as a sodium alginate or low methoxyl pectin. Colour, sweeteners, humectants and flavourings may be added. A typical example of such a liquid is:

|  | Parts by weight |
|---|---|
| Low viscosity alginate (type Keltone LV) | 2.43 |
| Dicalcium phosphate dihydrate (DCPD) | 0.89 |
| Sucrose | 15.71 |
| Trisodium phosphate (TSP) | 1.28 |
| Water | 74.33 |
| Glucose syrup | 5.36 |
| Colour | As required |
| Flavour | As required |
|  | 100.00 |
| Fruit | 50.00 |
|  | 150.00 |

Method
(i) Dry blend the alginate, DCPD, Sucrose and TSP
(ii) Dissolve the blend in the water
(iii) Add this solution to warmed glucose syrup
(iv) Immerse fruit in this solution ensuring complete coverage.
(3) Placed immersed fruit in a vacuum chamber and carry out the following pressure changes:
(i) Reduce pressure from atmospheric pressure down to 300 mmHg vacuum at the maximum rate of 100 mmHg/minute.
(ii) Then increase pressure from 300 mmHg vacuum to atmospheric pressure at a maximum rate of 30 mmHg/minute. A rate of 10 mm Hg/minute was used in this example
(4) Take the fruit in solution out of the vacuum chamber. Remove excess solution from surface of the fruit.
(5) Place fruit pieces in an acid bath to induce gelation of impregnated solution. The fruit is submerged in the following acid-calcium bath for about 20 minutes to allow gelation. Mild agitation is needed.

|  | Parts by weight |
|---|---|
| Citric Acid | 1.5 |
| Dicalcium Phosphate Dihydrate (DCPD) | 1.0 |
| Water | 97.5 |
|  | 100.0 |

(6) Rinse the fruit with water.
(7) Dry at 40°C to remove up to 5% moisture and to allow the fruit pieces to equilibrate. The time required will depend upon the humidity and the velocity of the air flow over the fruit.
(8) Blast or cryogenic freeze the fruit. Store at -18°C or below.
Kiwifruit is a fruit of a kind capable of being successfully treated by the process of the present invention.

To summarise the preferred method
A process has been developed which minimises the loss of functional characteristics, such as appearance and texture, in whole and sliced frozen fruits. Traditional freezing processes cause texture degradation in frozen fruits due to ice formation in the cells and results in collapse of cell structure upon thawing. This process removes some oxygen and other tissue gases from the fruit and replaces them with a hydrophilic colloid which binds water and minimises ice crystal formation as well as providing structural support. The colloid solution may also contain compounds to improve the organoleptic and visual attributes of the product, for example sweeteners, humectants flavours and colours. The formation of a firm gelled structure within the fruit pieces minimises drip loss on thawing and the reduced level of interstitial and dissolved gases within the fruit will help improve the storage life. A brief review of the process follows.

The fruit is washed and/or sliced. It is then submerged in a neutral-alkaline pH solution containing a hydrophilic colloid. The fruit in solution is then placed in a vacuum chamber and subjected to a series of sub atmospheric pressure changes. The vacuum is gradually released to reduce texture damage. This change can occur from 1 minute to up to 4 hours. It is then taken out of the solution, excess solution is removed and the pieces of fruit are then put into an acid/calcium bath for a period of time, to lower the pH of the system, to release calcium ions, and so set the gelling agent. The sodium alginate - calcium linkage is the main basis of this gel. This linkage is due to cross-linkage between uronic acid groups on the adjacent alginate molecule. Some hydroxyl groups may also be involved in the calcium-alginate linkage.

If low methoxyl pectin is used, the calcium ions link with the free carboxyl groups on the pectin molecule.

The fruit is then rinsed and dried to allow equilibration and to remove excess surface moisture. The fruit is then frozen quickly using blast or cryogenic freezing. On thawing the fruit will have a firm texture and minimal drip loss.

The infused solution need not necessarily be a alkaline pH solution. It may be at a neutral pH or even slightly acidic. However, the only stipulation is that it not be a moderately or highly acidic one (otherwise the hydrophilic colloid would gel before infusion occurred). The solution should be termed a neutral to alkaline pH solution (i.e. pH 5-12).

The main principle involved in this invention is the gelation of a hydrophilic colloid, preferably sodium alginate or low methoxyl pectin, at a level of .5-6.0% by weight with divalent cations, preferably calcium salts to achieve texture stabilisation within the fruit structure. The preferred method described is the use of a neutral - alkaline pH in the colloid solution and insoluble calcium salts such as dicalcium phosphate dihydrate at a level of .1 - 3.0%, by weight.

Those skilled in the art will also appreciate that other calcium salts such as calcium lactate at a level of .1 - 3.0% by weight could also be used in the colloid solution. Sequestrants such as Tetra sodium pyrophosphate and sodium citrate could be added at a level of .1 - 3% by weight to sequester calcium ions and prevent premature gelation. Slowly soluble acids such as adipic acid could be added to the colloid solution at a level of .1 - 1.0%, by weight to slowly release hydrogen ions and thus slowly release calcium ions to effect a linkage with the alginate molecule. Thus, a freeze-thaw stable structure would be formed within the fruit structure.

The preferred method described also uses an acid-insoluble calcium salt bath. The preferred acid is citric acid to be used at a level of 0.1 - 10%, by weight. Other acids which would achieve similar effects are lactic, fumaric, malic, tartaric, and acetic. These acids release the calcium ions from the insoluble calcium salts such as dicalcium phosphate dihydrate. The insoluble calcium salt is added at a level of 0.1 - 3.0%, by weight to the acid - calcium bath.

Those skilled in the art will also appreciate that soluble calcium salts such as calcium chloride, calcium lactate, and calcium gluconate could also be used in the bath without the use of acids such as citric. Sequestrants such as sodium citrate and tetra sodium phosphate could be added to partially bind the soluble calcium salts and so control the rate of gelation of the sodium alginate.

The vacuum process that is used for each fruit will be different. The infusion times and magnitude of vacuums applied will be different for each fruit, depending on the cellular nature and geometry of that particular fruit piece.

Each product requires a different vacuum infusion treatment. Experimentation with each fruit is necessary to develop the required treatment.

Vacuum Infusion Treatment:

1.0 Kiwifruit

A low level of vacuum was used as the kiwifruit slices have a high surface area to volume ratio and this surface is very permeable. The fruit flesh is delicate and may be disrupted too much at higher vacuums. Thirty minutes is an acceptable time frame within which to process.

Two parameters were set initially with the vacuum treatment. They are:
    (i) the maximum vacuum to be used was 300 mmHg vacuum; and
    (ii) the time frame for the vacuum treatment should be no more than 30 minutes.

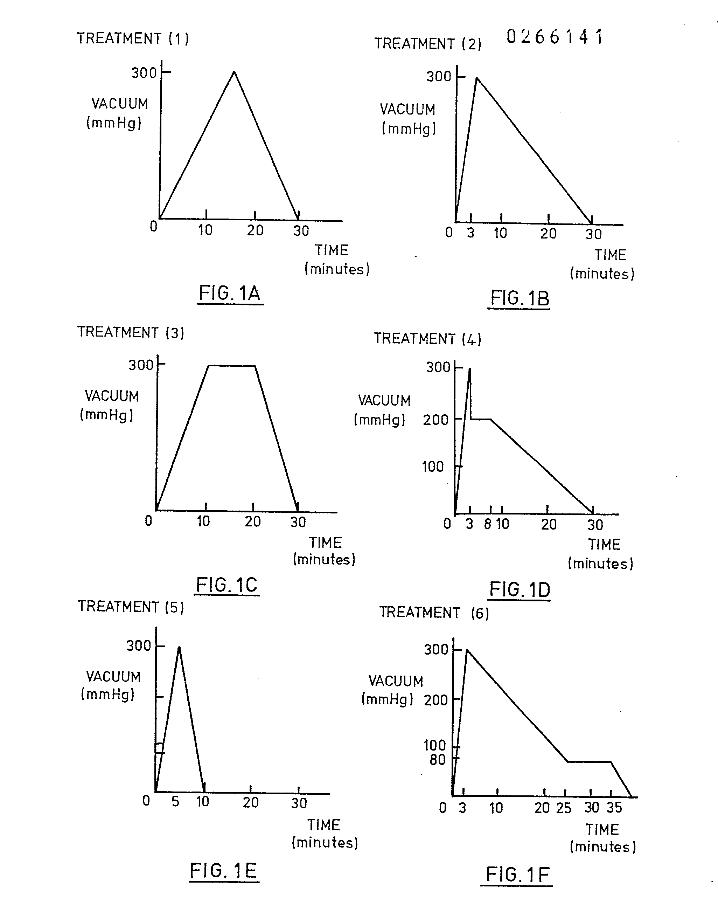

Six different time profiles were tried for the vacuum treatment. The six profiles are as exemplified in Figure 1A to Figure 1F.

In the accompanying drawings Figure 1A shows a plot of vacuum applied against time showing a gradual increase in vacuum and then a gradual decrease of the vacuum,

Figure 1B is a similar plot to that of Figure 1A showing a more rapid application of vacuum and a more gradual lessening of the release of the vacuum,

Figure 1C is similar to Figures 1A and 1B but shows a more rapid application and more rapid release of a vacuum than shown in Figure 1A, but the holding of the vacuum at 300 mmHg for a period of time,

Figure 1D is a variation of Figures 1A through to 1C showing a manner in which the application or vacuum can be further varied, Figure 1E is a similar plot to that of Figure 1A showing a much more rapid onsert in dropping of vacuum over a smaller time period and,

Figure 1F is yet a further variation of the plots of Figure 1A through to 1E.

They were:

Treatment 2 (Figure 1B) proved to be the best of all. This one was used in subsequent trials.

A more detailed description of Treatment 2 follows:

(i) decrease pressure to vacuum of 300 mmHg at a maximum rate of 100 mmHg/min; and

(ii) increase pressure to atmospheric at a maximum rate of 12 mmHg/min.

Example 2 - Strawberries

The structure of a strawberry makes the infusion process very difficult. They have a small surface area to volume ratio and the cellular structure is not conducive to impregnation. Therefore, a higher vacuum was required here than for the kiwifruit.

Five different trials were conducted to ascertain the optimal maximum vacuum to use. The following rules were used so that minimal damage was done to the fruit:

(i) when reducing pressure down to 500 mmHg vacuum, the maximum rate of pressure reduction was 100 mmHg/min;

(ii) when reducing pressure below 500 mmHg vacuum, to 100 mmHg the maximum rate of pressure reduction was 10 mmHg/min;

(iii) when increasing pressure from 700 mmHg vacuum up to atmospheric, the maximum rate used was 30 mmHg/min; and

(iv) hold at maximum vacuum for two hours. This is termed the residence time.

The magnitude of the maximum vacuums used in the vacuum operation were: 300, 400, 500, 600, 700 mmHg vacuum. Whole strawberries and half strawberries were trialed. Table 1 below summarises the results of these trials for the strawberry halves.

Table 1:

Effects of Various Maximum Vacuum Levels on Integrity of Strawberry Halves.

| MAXIMUM VACUUM (mmHg) | DESCRIPTION OF FROZEN/THAWED FRUIT |
|---|---|
| 300 | Substantial drip loss, fruit structure damaged |
| 400 | Moderate drip loss, fruit structure damaged |
| 500 | Some drip loss, fruit structure damaged |
| 600 | Little drip loss, firmer fruit |
| 700 | Minimal drip loss, firm fruit |

Table 2 summarises the results of trials for whole strawberries.

6

Table 2:

Effects of Various Maximum Vacuum Levels on Integrity of Whole
Strawberries.

| MAXIMUM VACUUM (mmHg) | DESCRIPTION OF FROZEN/THAWED FRUIT |
|---|---|
| 300 | Very substantial drip loss, fruit structure damaged |
| 400 | Substantial drip loss, fruit structure damaged. |
| 500 | Moderate drip loss, fruit structure damaged. |
| 600 | Moderate drip loss, fruit structure damaged. |
| 700 | Some drip loss, fruit structure slightly damaged. |

Using a maximum vacuum of 700 mmHg produced the most satisfactory fruit. Fruit treated in this way was firm and had minimal drip loss.

The whole strawberries had more drip loss and were not as firm as the infused strawberry halves. The greater surface area to volume ratio and the more permeable surface down the length of cut in the strawberry halves, attributed to their better performance. The relatively impermeable outer surface of the whole strawberry makes infusion more difficult.

Procedure - Strawberry Halves.

Strawberry halves were more freeze-thaw stable after impregnation with the hydrophilic colloid solution. The methodology is described below:

(1) The strawberries are dehulled, washed and halved.

(2) An alkaline pH solution containing alginate is prepared. Glycerol was added as a humectant to further bind water and stabilize the fruit structure.

| | Parts by weight |
|---|---|
| Low viscosity alginate (type Keltone LV) | 2.43 |
| Trisodium phosphate (TSP) | 1.28 |
| Dicalcium phosphate dihydrate (DCPD) | 0.89 |
| Glycerol | 95.40 |
| | 100.00 |
| Fruit | 50.00 |

Method

(i) Dry blend the alginate, DCPD and TSP.

(ii) Dissolve dry blend into the glycerol.

(iii) Immerse fruit in this solution, ensuring complete coverage.

(3) Place immersed fruit in a vacuum chamber and carry out the following pressure changes:

(i) Reduce pressure down to 500 mmHg vacuum at the maximum rate of 100 mmHg/min.

(ii) Reduce pressure to 700 mmHg vacuum at the maximum rate of 10 mmHg/min.

(iii) Hold at 700 mmHg vacuum for 2 hours.

(iv) Increase pressure from 700 mmHg vacuum to atmospheric at a maximum rate of 30 mmHg/min.

(4) Remove fruit in solution from vacuum chamber. Remove excess solution from the fruit.

(5) Induce gelation of the hydrophilic colloid in situ in the following bath:

|  | Parts of weight |
|---|---|
| Citric acid | 1.5 |
| Dicalcium Phosphate Dihydrate (DCPD) | 1.0 |
| water | 97.5 |
|  | ———— |
|  | 100.00 |

Residence time is 20 minutes. Mild agitation is required.

(6) Rinse the strawberries with water.

(7) Dry at 55° C to remove up to 5% moisture from the fruit and allow equilibration.

(8) Quick freeze the fruit pieces individually. Store at -18° C or below.

Most important parameters for successful use of process of the present invention.

(1) Fruit or seed bearing vegetables used are the products showing significant advantage in texture stabilisation especially freeze-thaw stable process.

(2) Vacuum infusion will vary for each particular product depending on geometry and cellular structure.

(3) Colloid solution must penetrate into the food piece, not just as a surface coating of the colloid around the food piece.

(4) Food must be of suitable size so that infusion is most effective, i.e. large surface area to volume ratio is preferable and will lead to more colloid solution penetrating the food structure in a given time.

(5) Food is peeled, if possible, to cut down external resistance to infusion.

(6) The colloid solution must not gel until it is infused into the food structure. The use of alkaline pH, insoluble calcium salts and sequestrants prevents the premature gelation of the colloid solution.

(7) Infusion must be followed by immersion in an acid-calcium bath to effect adequate setting of the gel.

(8) The drying step removes excess moisture from the exterior of the product. The product is freeze/thaw stable in itself. Drying only removes the excess moisture which freezes and thaws on the outside of the products. This excess moisture may be undesirable.

(9) The fruit acids and natural calcium in the fruit help to set the gel but additional acid and calcium salts are needed to make an effective gel structure.

(10) This process has the most advantages over traditional processing techniques when applied to frozen products. It will also produce a texture stable product when heated, dehydrated, refrigerated and thermally processed which is substantially improved over conventional products.

(11) Where vacuum infusion is not possible or practical, injection may be used.

(12) pH of infusion solution must be (only slightly acidic), neutral or alkaline. The pH of this solution must not allow premature setting of the colloid.

(13) Other calcium activated setting gums may be used as the colloid or in conjunction with sodium alginate. Low methoxyl pectin are examples.

potassium alginate

magnesium alginate

ammonium alginate

propylene glycol alginate

(14) Other colloids may be included in the infusion solution to help improve stability, e.g. starches, xanthan gum, carboxymethyl-cellulose (CMC), guargum, carrageenan, locust been gum, gelatin, etc.

(15) The colloid binds water and so minimises ice crystal formation within the product. This improves the freeze thaw stability.

(16) The gelled colloid is itself freeze/thaw stable and provides a firm stable framework within the product as it is processed.

(17) Drip loss is reduced on thawing.

(18) Loss of texture is minimised in processing.

(19) Colours, sweeteners, humectants flavours may be infused into the product to improve it or replace those normally lost in processing.

(20) The composition of the infusion solution can be tailored to suit each food, e.g. more sugar added, less alginate, etc.

(21) Some gas is removed from the fruit which may help to extend shelf life.

(22) The process produces a freeze thaw stable product which has minimal loss of functional characteristics such as structure, texture, minimal drip loss as compared with conventionally frozen products.

(23) The fruit may have to be treated to increase its permeability, i.e. dewax external surface of berries, peel fruit, puncture structure with small holes to increase permeability.

(24) The viscosity of the infusion solution is important. The thinner the solution the easier it is to infuse. However the gelled, infused solution must be strong enough to withstand processing.

(25) Varying levels of vacuum and residence time are used depending on the food. The structure, form and inherent permeability of the product will dictate these.

Persons skilled in the art will appreciate the wide variety of food species capable of being used and not just those in respect of which a specific example has been given.

A person skilled in the art will appreciate that colloid solutions capable of being gelled are known and have been known for use in food products. However there has been no deliberate impregnation of the interstitial and/or intracellular spaces of a fruit in order to achieve any of the advantages sought by the preferred form of the present invention. By way of interest reference should be had to the following patent specifications which give examples of various processes and/or food products, many of which involve a gel.

U.S. Patent

3,843,810        Process of Air Evacuation of Foods Under Ultra-low Pressure.

2,791,508        Food Products and Method of Making the Same.

3,010,831        Process for Treating Food Products.

2,709,857        Apparatus for Treating Food Products.

4,190,676        Composite Fruit Gel and Ice Confection.

3,932,673        Fruit Stuffed with Brine Resistant Hard Gel and Method of Forming the Same.

4,348,418        Simulated Food Product and Method of Manufacture Therefore.

3,367,783        Process of Preparing a Fruit Gel.

4,119,739        Process of Preparing Simulated Fruit.

Australian Patent

16023/76        A Fruit-Like Food Product.

60741/80        Simulated Food Products and Method of Manufacture Therefore.

British Patent

1369/198        Fruit-Like Food Product.

The novelty of the present process in its preferred form over all previous art including the foregoing patent specifications can be summarised as follows:

(1) The sequence of steps involved in the procedure is novel. The specific order obtains satisfactory results. Impregnation of the fruit with a hydrophilic colloid such as sodium alginate or low methoxyl pectin and the removal of gases under vacuum is followed by gelation in an acid/calcium bath. Drying may follow to allow equilibration and the removal of excess surface moisture. Finally the product is individually quick frozen.

(2) The process produces a freeze-thaw stable product which has minimal loss of functional characteristics such as structure, texture, and minimal drip loss as compared to conventionally frozen products.

(3) Oxygen and tissue gas is partially removed from the fruit and replaced by a hydrophilic colloid which will gel when exposed to calcium and hydrogen ions.

(4) A hydrophilic solution is impregnated into a piece of fruit in its original form (either whole or sliced) i.e. the fruit has not been comminuted and then reformed to be similar to the original fruit as in many fabricated/reformed products.

(5) A neutral-alkaline pH solution containing a hydrophilic colloid which may be capable of gelling is placed within the fruit. Gelation occurs from the exterior surface into the interior structure due to the reaction with the acid/calcium bath and the internal action of natural fruit acids

(6) The process allows the addition of flavours, colours, sweeteners, humectants and other hydrophilic colloids into the internal structure of the fruit.

From the foregoing a person skilled in the art will appreciate that the present invention provides a novel and inventive approach capable of providing a food product and food products capable of being made by such a process which have enhanced functional characteristics.

## Claims

1. A method to minimise the texture instability of a food product having intracellular and/or interstitial spaces, said method comprising the steps of impregnating the interstitial and/or intracellular spaces of a food with a gellable colloid solution by a process selected from vacuum infusion and/or pressure injection, and
thereafter causing said colloid solution to gel.

2. A method as claimed in claim 1 wherein said food is selected from the group consisting of fruits and seed bearing vegetable fruits.

3. A method as claimed in claim 1 or 2 wherein said impregnating is by vacuum infusion.

4. A method as claimed in claim 1 wherein the food is frozen after said colloid solution has gelled.

5. A method as claimed in claim 3 wherein the food is frozen after said colloid solution has gelled.

6. A method as claimed in claim 4 or 5 wherein the outer surface of the food is partially dried prior to freezing.

7. A method as claimed in claim 1 wherein said gellable colloid solution can include at least one additive selected from the group consisting of colouring agents, sweeteners, humectants and flavours.

8. A texture stable food product prepared from a food having interstitial and/or intracellular spaces, the product having been stabilised substantially against structural collapse by the setting of a colloid gel solution that has impregnated sufficient of said spaces for the texture stabilising purpose, the impregnation having been achieved by a process selected from vacuum infusion and/or solution injection.

9. A product of claim 8 wherein said food is selected from the group consisting of fruits and seed bearing vegetable fruits.

10. A product of claim 8 or 9 when frozen.

11. A texture stabilised product produced by a method as claimed in any one of claims 1 to 7.

TREATMENT (1)

TREATMENT (2)

FIG.1A

FIG.1B

TREATMENT (3)

TREATMENT (4)

FIG.1C

FIG.1D

TREATMENT (5)

TREATMENT (6)

FIG.1E

FIG.1F